# DEMANDE DE BREVET EUROPEEN

(11) **EP 4 282 283 A1**
(43) Date de publication de la demande: **29.11.2023**
(21) Numéro de dépôt: 23172993.0
(22) Date de dépôt: 12.05.2023
(51) Int. Cl.: A23N 15/02

(54) **PROCEDE ET INSTALLATION DE TRAITEMENT DE FRUITS RECOLTES EN GRAPPE, EN PARTICULIER DE RAISINS**

(30) Priorité: 24.05.2022 FR 2204984; 24.05.2022 FR 2204985
(71) Demandeur: Bucher Vaslin, 49290 Chalonnes sur Loire (FR)
(72) Inventeur: NOILET, Pascal, 49000 Angers (FR); DOINARD, Venceslas, 66440 Torreilles (FR)
(74) Mandataire: Ipsilon

(57) **Abrégé**

Procédé de traitement de fruits récoltés en grappes avec deux érafloirs (2), chaque érafloir (2) comprenant une entrée (3), une première sortie (4) et une deuxième sortie (5), un élément (6) d'éraflage mobile s'étendant entre l'entrée (3) et la première sortie (4) et un dispositif (7) d'entraînement en déplacement dudit élément (6) d'éraflage, pour générer une force d'éraflage fonction au moins de la vitesse dudit élément (6).

Ledit procédé comprend une étape de positionnement en série desdits érafloirs (2) pour former depuis le premier érafloir (2) en direction du dernier érafloir (2) de la série dit aval une ligne d'érafloirs (7) avec la première sortie (4) de chaque érafloir (2) communiquant avec l'entrée (3) de l'érafloir (2) disposé en aval et une étape d'entraînement de l'élément (6) d'éraflage de l'érafloir (2) amont à une vitesse inférieure à celle de l'élément (6) d'éraflage de l'érafloir (2) aval, cette vitesse de déplacement étant prise au niveau de la première sortie (4) de chaque érafloir (2) en un point (P) du ou de chaque élément (6) d'éraflage mobile le plus éloigné de l'axe de rotation ou le plus proche de l'axe d'oscillation dudit élément (6) d'éraflage.

## Description

La présente invention concerne un procédé et une installation de traitement de fruits récoltés en grappe, en particulier de raisins.

Elle concerne en particulier un procédé de traitement de fruits récoltés en grappes au moyen d'au moins deux érafloirs, chaque érafloir comprenant :
- au moins une entrée, une première sortie et une deuxième sortie,
- au moins un élément d'éraflage mobile s'étendant entre l'entrée et la première sortie dudit érafloir et
- un dispositif d'entraînement en déplacement dudit au moins un élément d'éraflage mobile, ledit au moins un élément d'éraflage mobile de chaque érafloir étant un élément rotatif, ou respectivement oscillant, configuré pour générer, sous l'effet de son déplacement à rotation autour d'un axe de rotation, ou respectivement à pivotement autour d'un axe de pivotement entre deux positions extrêmes, une force d'éraflage fonction au moins de la vitesse de déplacement dudit élément.

Des installations de traitement de fruits récoltés en grappes, en particulier de vendange, comprenant au moins des grains ou baies et une matière autre que les grains en vue de la séparation des grains d'au moins une partie de ladite matière sont bien connues à ceux versés dans cet art. Ces installations appelées érafloirs ou égrappoirs sont par exemple décrites dans les brevets FR 2 963 209, EP 3 794 961. Il convient de rappeler que l'éraflage est l'opération qui consiste à séparer les grains de raisin de la rafle, support pédonculaire vert et ligneux qui soutient et structure la grappe. La force d'éraflage est donc la force appliquée par l'élément d'éraflage mobile de l'érafloir sur la liaison rafle/baie lorsqu'ils sont en contact pour séparer la baie de la rafle. Des installations de traitement de fruits récoltés en grappe dans laquelle des érafloirs sont disposés en parallèle sont connues. Par ailleurs, de plus en plus souvent, il est exigé pour des contraintes de qualité, un tri des baies en fonction de leur maturité. Jusqu'à présent, ce tri est un tri densimétrique basé sur la teneur en sucres des baies ou un tri optique. Cette opération de tri en fonction de la maturité est généralement complexe à mettre en oeuvre.

Un but de l'invention est de proposer une installation de traitement du type précité dont la conception peut permettre de manière simple, si nécessaire, de trier les baies en fonction de leur maturité.

A cet effet l'invention a pour objet un procédé de traitement de fruits récoltés en grappes au moyen d'au moins deux érafloirs, chaque érafloir comprenant :
- une entrée, une première sortie et une deuxième sortie,
- au moins un élément d'éraflage mobile s'étendant entre l'entrée et la première sortie dudit érafloir et
- un dispositif d'entraînement en déplacement dudit au moins un élément d'éraflage mobile, ledit au moins un élément d'éraflage mobile de chaque érafloir étant un élément rotatif, ou respectivement oscillant, configuré pour générer, sous l'effet de son déplacement à rotation autour d'un axe de rotation, ou respectivement à pivotement autour d'un axe de pivotement entre deux positions extrêmes, une force d'éraflage fonction au moins de la vitesse de déplacement dudit élément d'éraflage mobile, caractérisé en ce que ledit procédé comprend une étape de positionnement en série à la suite l'un de l'autre desdits érafloirs pour former depuis le premier érafloir de la série dit amont en direction du dernier érafloir de la série dit aval une ligne d'érafloirs avec la première sortie de chaque érafloir communiquant avec l'entrée de l'érafloir disposé en aval et en ce que pour au moins deux des érafloirs de la série, ledit procédé comprend, au moyen des dispositifs d'entraînement, une étape d'entraînement en déplacement du au moins un élément d'éraflage de l'érafloir disposé en amont pris suivant la direction amont/aval le long de la ligne d'érafloirs à une vitesse de déplacement inférieure à la vitesse de déplacement du au moins un élément d'éraflage de l'érafloir disposé en aval, cette vitesse de déplacement étant prise au niveau de la première sortie de chaque érafloir, en un point du ou de chaque élément d'éraflage mobile le plus éloigné de l'axe de rotation ou le plus proche de l'axe d'oscillation dudit élément d'éraflage, cette vitesse de déplacement de chaque élément d'éraflage mobile exprimée en mètres par seconde étant définie par V= DIT avec D exprimé en mètres correspondant à la distance dite angulaire parcourue par ledit point en un tour de rotation ou en un déplacement entre les deux positions extrêmes de l'élément d'éraflage mobile et T exprimé en secondes correspondant à la durée nécessaire audit point pour parcourir ladite distance.

L'étape d'entraînement en déplacement du au moins un élément d'éraflage de l'érafloir disposé en amont pris suivant la direction amont/aval le long de la ligne d'érafloirs à une vitesse de déplacement inférieure à la vitesse de déplacement du au moins un élément d'éraflage de l'érafloir disposé en aval permet de générer au niveau de la première sortie desdits érafloirs une force d'éraflage qui suivant la direction amont/aval croît d'un érafloir à l'autre le long de la ligne d'érafloirs. Ainsi, les fruits les moins mûrs peuvent être détachés au niveau de l'érafloir aval sans que les fruits les plus mûrs déjà détachés au niveau de l'érafloir amont ne subissent un traumatisme exagéré. Chaque érafloir comprend donc une entrée d'admission des produits à traiter, une première sortie et une deuxième sortie. La deuxième sortie est disposée entre l'entrée et la première sortie pour permettre d'évacuer des produits éraflés, c'est-à-dire notamment des fruits séparés des supports de fruits. Les fruits sont des baies dans le cas du raisin. La deuxième sortie est disposée sur le trajet suivi par les produits depuis l'entrée en direction de la première sortie. La première sortie sert à l'évacuation de la rafle et des produits non encore éraflés. L'idée de disposer les érafloirs en série et de générer, au moins au niveau de la première sortie d'au moins deux des érafloirs de la série, une force d'éraflage différente résultant d'une vitesse de déplacement différenciée des éléments d'éraflage mobiles d'un érafloir à un autre, permet de manière simple à travers le processus d'éraflage de trier les baies au moins en fonction de leur maturité. La possibilité de disposer d'érafloirs dont les vitesses de déplacement des éléments d'éraflage mobiles sont différenciées d'un érafloir à l'autre au moins au niveau de la première sortie de chaque érafloir permet d'augmenter la force de séparation active sur la liaison grain/pédicelle des grappes au cours du passage des produits d'un érafloir à un autre. Ainsi, l'entraînement du au moins un élément d'éraflage d'un érafloir amont à une vitesse réduite permet au niveau de l'érafloir amont le détachement uniquement des baies les plus mûres des rafles et la collecte de ces baies plus mûres au niveau de la deuxième sortie dudit érafloir amont tandis que l'entraînement du au moins un élément d'éraflage d'un érafloir aval à une vitesse élevée permet au niveau de l'érafloir aval le détachement de baies moins mûres des rafles et la collecte de baies moins mûres au niveau de la deuxième sortie dudit érafloir aval. Ce détachement des baies moins mûres des grappes est rendu possible par une vitesse prise au niveau de la première sortie de l'érafloir aval plus élevée, du ou des éléments d'éraflage mobiles de l'érafloir aval, cette vitesse plus élevée se traduisant par une augmentation de la force de séparation active sur la liaison baie/pédicelle. Il devient ainsi possible au moment de l'éraflage d'utiliser les érafloirs pour si nécessaire trier de manière automatique les fruits en fonction de leur maturité.

Il doit être noté que dans tout ce qui précède comme dans tout ce qui suit les termes amont et aval sont pris par référence au sens de déplacement des produits à traiter, c'est-à-dire des fruits récoltés en grappe, depuis l'entrée du premier érafloir de la ligne d'érafloirs en direction de la première sortie du dernier érafloir de la ligne d'érafloirs. Dans cette ligne d'érafloirs, la première sortie de chaque érafloir communique avec l'entrée de l'érafloir le plus proche disposé en aval lorsque cet érafloir aval est présent. Ainsi, bien évidemment, la première sortie du dernier érafloir de la série ne communique pas avec l'entrée d'un autre érafloir de la série.

Selon un mode de mise en oeuvre du procédé, la distance dite angulaire parcourue, par le point du ou de chaque élément d'éraflage mobile le plus éloigné de l'axe de rotation ou le plus proche de l'axe d'oscillation dudit élément d'éraflage, en un tour de rotation ou en un déplacement entre les deux positions extrêmes de l'élément d'éraflage mobile est égale à α × d avec α exprimé en radians et correspondant à l'angle parcouru par ledit point en un tour de rotation ou en un déplacement entre les deux positions extrêmes de l'élément d'éraflage mobile et d exprimée en mètres et correspondant à la distance entre ledit point et l'axe d'oscillation ou de rotation dudit élément d'éraflage mobile. Il doit être noté que dans le cas d'un élément d'éraflage rotatif, l'angle α est égal à 2 π et, la distance d entre le point et l'axe rotatif au plus grand rayon de l'élément d'éraflage rotatif au niveau de la première sortie de l'érafloir.

L'invention a encore pour objet une installation de traitement de fruits récoltés en grappes, ladite installation comprenant au moins deux érafloirs, chaque érafloir comprenant une entrée, une première sortie et une deuxième sortie, au moins un élément d'éraflage mobile s'étendant entre l'entrée et la première sortie dudit érafloir et un dispositif d'entraînement en déplacement dudit au moins un élément d'éraflage mobile, ledit au moins un élément d'éraflage mobile de chaque érafloir étant un élément rotatif, ou respectivement oscillant, configuré pour générer sous l'effet de son déplacement à rotation autour d'un axe de rotation, ou respectivement à pivotement autour d'un axe de pivotement entre deux positions extrêmes, une force d'éraflage fonction au moins de la vitesse de déplacement dudit élément d'éraflage mobile, caractérisée en ce que les érafloirs sont disposés en série à la suite l'un de l'autre pour former depuis le premier érafloir de la série dit amont en direction du dernier érafloir de la série dit aval une ligne d'érafloirs avec la première sortie de chaque érafloir communiquant avec l'entrée de l'érafloir disposé en aval et,
en ce que pour au moins deux des érafloirs de la série, les dispositifs d'entraînement des éléments d'éraflage mobiles desdits érafloirs sont configurés pour permettre un entraînement en déplacement du au moins un élément d'éraflage mobile de l'érafloir disposé en amont à une vitesse de déplacement inférieure à la vitesse de déplacement du au moins un élément d'éraflage de l'érafloir disposé en aval, cette vitesse de déplacement étant prise au niveau de la première sortie de chaque érafloir, en un point du ou de chaque élément d'éraflage mobile le plus éloigné de l'axe de rotation ou le plus proche de l'axe d'oscillation dudit élément d'éraflage, cette vitesse de déplacement de chaque élément d'éraflage mobile exprimée en mètres par seconde étant définie par V= DIT avec D exprimé en mètres correspondant à la distance dite angulaire parcourue par ledit point en un tour de rotation ou en un déplacement entre les deux positions extrêmes de l'élément d'éraflage mobile et T exprimé en secondes correspondant à la durée nécessaire audit point pour parcourir ladite distance.

Ainsi, pour au moins deux des érafloirs de la série, les dispositifs d'entraînement des éléments d'éraflage mobiles desdits érafloirs sont configurées pour permettre un entraînement en déplacement des éléments d'éraflage mobiles desdits érafloirs à une vitesse de déplacement, prise au niveau de la première sortie desdits érafloirs, différente d'un érafloir à l'autre pour permettre de générer, au niveau de la première sortie desdits érafloirs, une force d'éraflage qui suivant la direction amont/aval croît d'un érafloir à l'autre le long de la ligne d'érafloirs et assurer ainsi, en parallèle de l'éraflage, un tri des fruits récoltés en grappe en fonction de leur maturité.

Selon un mode de réalisation de l'invention, les dispositifs d'entraînement des ou au d'au moins deux des érafloirs, qui sont configurés pour permettre un entraînement en déplacement du au moins un élément d'éraflage mobile de l'érafloir disposé en amont à une vitesse de déplacement inférieure à la vitesse de déplacement du au moins un élément d'éraflage de l'érafloir disposé en aval, avec l'amont et l'aval pris suivant la direction amont/aval le long de la ligne d'érafloirs, comprennent chacun au moins un moteur, un mécanisme de transmission du mouvement de rotation du au moins un moteur audit au moins un élément d'éraflage dudit érafloir et une commande dudit moteur.

Selon un mode de réalisation de l'invention, les commandes des dispositifs d'entraînement des ou au d'au moins deux des érafloirs, qui sont configurées pour permettre de commander un entraînement en déplacement du au moins un élément d'éraflage mobile de l'érafloir disposé en amont à une vitesse de déplacement inférieure à la vitesse de déplacement du au moins un élément d'éraflage de l'érafloir disposé en aval, avec l'amont et l'aval pris suivant la direction amont/aval le long de la ligne d'érafloirs, sont distinctes.

Ainsi, dans la version la plus simple, lorsque les mécanismes de transmission et les éléments d'éraflage mobiles sont identiques pour les deux érafloirs, la vitesse de déplacement du au moins un élément d'éraflage mobile de chaque érafloir, prise au niveau de la première sortie dudit érafloir, est considérée comme directement dépendante de la vitesse de rotation du moteur du dispositif d'entraînement dudit érafloir. Il suffit donc, pour au moins deux des érafloirs de la série dont les dispositifs d'entraînement des éléments d'éraflage mobiles desdits érafloirs sont configurés pour permettre un entraînement en déplacement des éléments d'éraflage mobiles desdits érafloirs à une vitesse de déplacement, prise au niveau de la première sortie desdits érafloirs, différente d'un érafloir à l'autre en vue de générer, au niveau de la première sortie desdits érafloirs, une force d'éraflage qui suivant la direction amont/ aval croît d'un érafloir à l'autre le long de la ligne d'érafloirs, d'entraîner en rotation le ou les moteurs du dispositif d'entraînement de l'érafloir amont à une vitesse de rotation inférieure à la vitesse de rotation du ou des moteurs du dispositif d'entraînement de l'érafloir aval.

Selon un mode de réalisation de l'invention, la commande du dispositif d'entraînement d'au moins l'un des érafloirs est un variateur de vitesse configuré pour commander le ou chaque moteur associé au mécanisme de transmission de mouvement à une vitesse variable.

Selon un mode de réalisation de l'invention, les mécanismes de transmission des dispositifs d'entraînement desdits érafloirs sont configurés, c'est-à-dire conformés et dimensionnés, pour présenter un rapport de transmission de la vitesse de rotation du moteur audit au moins un élément d'éraflage de l'érafloir différent d'un érafloir à l'autre. Ainsi, lorsque les vitesses de rotation des moteurs et les éléments d'éraflage mobiles sont identiques pour les deux érafloirs, la vitesse de déplacement du au moins un élément d'éraflage mobile de chaque érafloir, prise au niveau de la première sortie dudit érafloir, est considérée comme directement dépendante du rapport de transmission de la vitesse de rotation du moteur audit au moins un élément d'éraflage de l'érafloir. Il suffit donc pour au moins deux des érafloirs de la série dont les dispositifs d'entraînement des éléments d'éraflage mobiles desdits érafloirs sont configurés pour permettre un entraînement en déplacement des éléments d'éraflage mobiles desdits érafloirs à une vitesse de déplacement, prise au niveau de la première sortie desdits érafloirs, différente d'un érafloir à l'autre pour permettre de générer, au niveau de la première sortie desdits érafloirs, une force d'éraflage qui suivant la direction amont/ aval croît d'un érafloir à l'autre le long de la ligne d'érafloirs, de prévoir le mécanisme de transmission de mouvement du dispositif d'entraînement de l'érafloir amont avec un rapport de transmission de la vitesse du moteur audit au moins un élément d'éraflage mobile dudit érafloir inférieur à celui du mécanisme de transmission de mouvement du dispositif d'entraînement de l'érafloir aval.

Selon un mode de réalisation de l'invention, le au moins un élément d'éraflage mobile d'au moins l'un des érafloirs, qui est un élément d'éraflage oscillant, a la forme d'une boîte oscillante présentant deux extrémités opposées ouvertes et une paroi latérale périphérique de liaison desdites extrémités munie d'ouvertures traversantes, l'une des extrémités de la boîte forme l'entrée de l'érafloir, l'extrémité opposée de la boîte forme la première sortie de l'érafloir et les ouvertures traversantes de la paroi latérale périphérique forment la deuxième sortie de l'érafloir.

Selon un mode de réalisation de l'invention, le au moins un élément d'éraflage mobile d'au moins l'un des érafloirs, qui est un élément d'éraflage rotatif, se présente sous forme d'un arbre rotatif équipé de doigts radiaux, ledit arbre rotatif étant disposé à l'intérieur d'un corps tubulaire ouvert à chacune de ses extrémités, ledit arbre rotatif s'étendant depuis l'une des extrémités ouvertes dudit corps jusqu'à l'autre extrémité dudit corps, ce corps tubulaire étant délimité par une paroi périphérique munie d'ouvertures traversantes, l'une des extrémités ouvertes du corps formant l'entrée de l'érafloir, l'autre des extrémités ouvertes du corps formant la première sortie de l'érafloir et les ouvertures traversantes de la paroi périphérique de délimitation du corps formant la deuxième sortie de l'érafloir.

Selon un mode de réalisation de l'invention, l'installation comprend un dispositif de tri. Un tel dispositif de tri permet de trier les fruits en fonction de leurs formes et/ou de leurs dimensions.

Selon un mode de réalisation de l'invention, le dispositif de tri est un dispositif de tri par criblage disposé sous le ou les éléments d'éraflage mobiles des érafloirs. Un tel dispositif de tri par criblage permet de trier les fruits en fonction de leurs formes et/ou leurs dimensions.

Selon un mode de réalisation de l'invention, le dispositif de tri comprend au moins deux zones de tri disposées en série le long d'un trajet de circulation défini par la succession entrée/première sortie/entrée/première sortie des érafloirs disposés en série de sorte que l'une des zones de tri dite amont s'étend en amont de la ou les autres zones de tri dites aval, la zone de tri amont, qui s'étend au-dessous et à la verticale du premier érafloir de la série dit amont, est en communication directe avec ledit premier érafloir pour une alimentation directe par gravité de la zone de tri amont à partir du premier érafloir et la ou au moins l'une des zones de tri aval est une zone de tri à alimentation indirecte, cette zone de tri aval étant séparée des érafloirs par au moins un élément séparateur et étant disposée dans le prolongement de la zone de tri qui la précède pour être alimentée exclusivement à partir de la zone de tri qui la précède. Cette disposition permet pour les fruits issus d'un même érafloir et correspondant par exemple à des fruits mûrs de trier en outre ces fruits en fonction de leurs dimensions. La zone de tri à alimentation indirecte et la zone de tri qui la précède forment chacune un crible, le crible formé par la zone de tri à alimentation indirecte étant configuré pour trier des produits de dimension supérieure aux produits aptes à être triés par le crible formé par la zone de tri précédant la zone de tri à alimentation indirecte.

Selon un mode de réalisation de l'invention, l'élément séparateur surmontant la zone de tri à alimentation indirecte a la forme d'un dièdre ouvert en direction de la zone de tri à alimentation indirecte, ce dièdre délimitant depuis son sommet deux plans inclinés à pente descendante l'un, en direction d'une zone de tri disposée en amont de la zone de tri à alimentation indirecte, l'autre, en direction d'une zone de tri disposée en aval de la zone de tri à alimentation indirecte.

Selon un mode de réalisation de l'invention, l'élément séparateur surmontant la zone de tri à alimentation indirecte est un élément réglable en position dans le sens d'un décalage axial le long d'une ligne parallèle à la ligne formée par la succession de zones de tri disposées en série.

Selon un mode de réalisation de l'invention, chaque zone de tri délimite une surface de tri formée, entre un bord amont et un bord aval, d'une pluralité de rouleaux adjacents parallèles, le dispositif de tri comprend au niveau de chaque zone de tri un mécanisme d'entraînement en rotation des rouleaux dans un même sens de rotation pour permettre un déplacement des fruits récoltés en grappes à trier au-dessus de ladite surface de tri suivant une direction d'avance perpendiculaire à l'axe desdits rouleaux depuis le bord amont en direction du bord aval, lesdits rouleaux au niveau de chaque zone de tri des rouleaux calibreurs étant conformés ou disposés pour ménager au moins une ouverture ou une pluralité d'ouvertures calibrées entre deux rouleaux voisins pour permettre un passage et une chute de fruits récoltés en grappes à trier, les fruits récoltés en grappes à trier de dimension supérieure aux ouvertures restant au-dessus de la surface de tri et étant évacués au niveau du bord aval de celle-ci et le dispositif de tri comprend au moins deux récipients de collecte disposés chacun sous une ou plusieurs zones de tri et associés, l'un, à une ou plusieurs zones de tri et, l'autre, ou un autre, à une ou plusieurs autres zones de tri. Pour la zone de tri à alimentation indirecte et la zone de tri qui la précède, les ouvertures entre deux rouleaux d'une zone de tri sont de dimensions différentes d'une zone de tri à l'autre pour former des cribles aux caractéristiques de criblage différenciées. Ainsi, le crible formé par la zone de tri à alimentation indirecte est configuré pour trier des produits de dimension supérieure aux produits aptes à être triés par le crible formé par la zone de tri précédant la zone de tri à alimentation indirecte.

### Brève description des dessins

L'invention sera bien comprise à la lecture de la description suivante d'exemples de réalisation, en référence aux dessins annexés dans lesquels :
[Fig. 1] représente une vue schématique de côté d'une installation conforme à l'invention dont les éléments d'éraflage mobiles des érafloirs sont des éléments d'éraflage oscillants ;
[Fig. 2] représente une vue partielle en perspective d'une installation conforme à l'invention dont les éléments d'éraflage mobiles des érafloirs sont des éléments d'éraflage oscillant suivant un mouvement de monte et baisse ;
[Fig. 3] représente une vue partielle en perspective d'une installation conforme à l'invention dont les éléments d'éraflage mobiles des érafloirs sont des éléments d'éraflage oscillants suivant un mouvement latéral ;

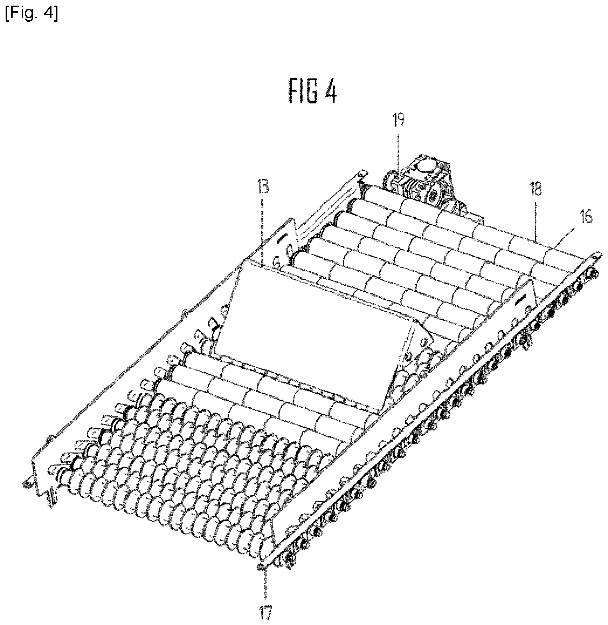

[Fig. 4] représente une vue partielle en perspective du dispositif de tri ;
[Fig. 5] représente une vue partielle en perspective d'un élément séparateur ;

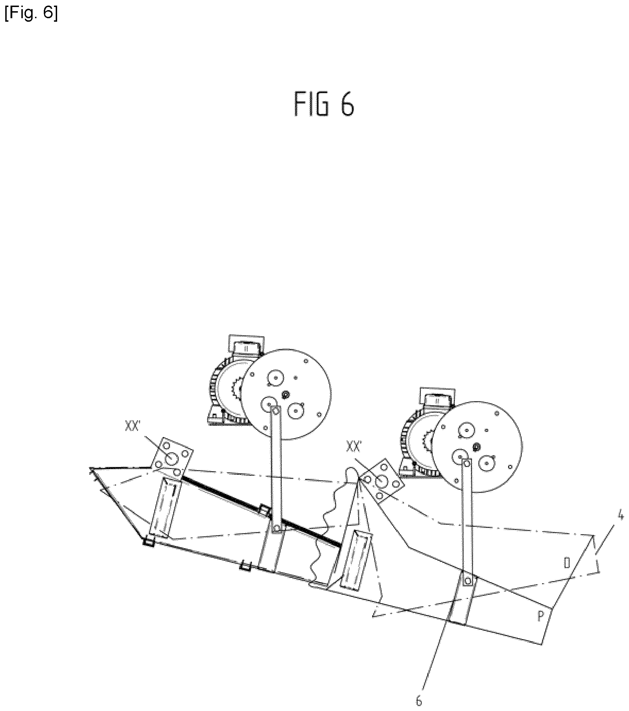

[Fig. 6] représente une vue schématique partielle d'une installation pour illustrer le déplacement des érafloirs ;

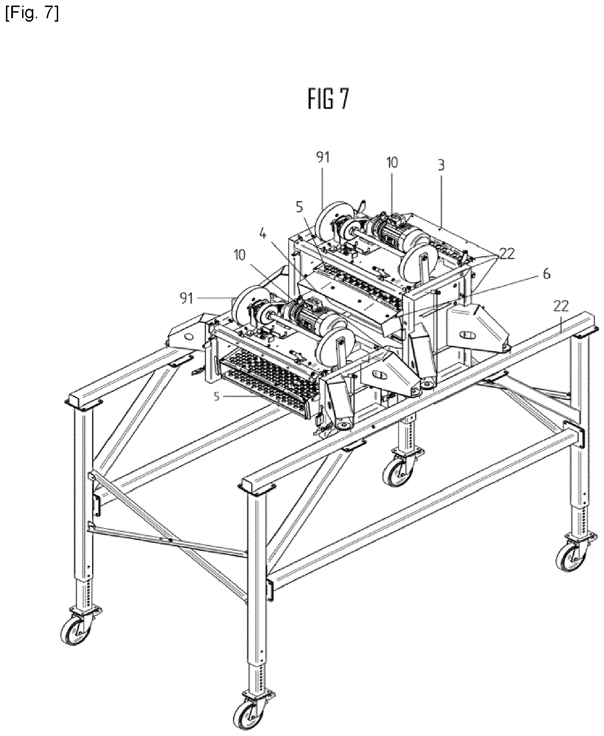

[Fig. 7] représente une vue partielle en perspective d'une installation conforme à l'invention ;

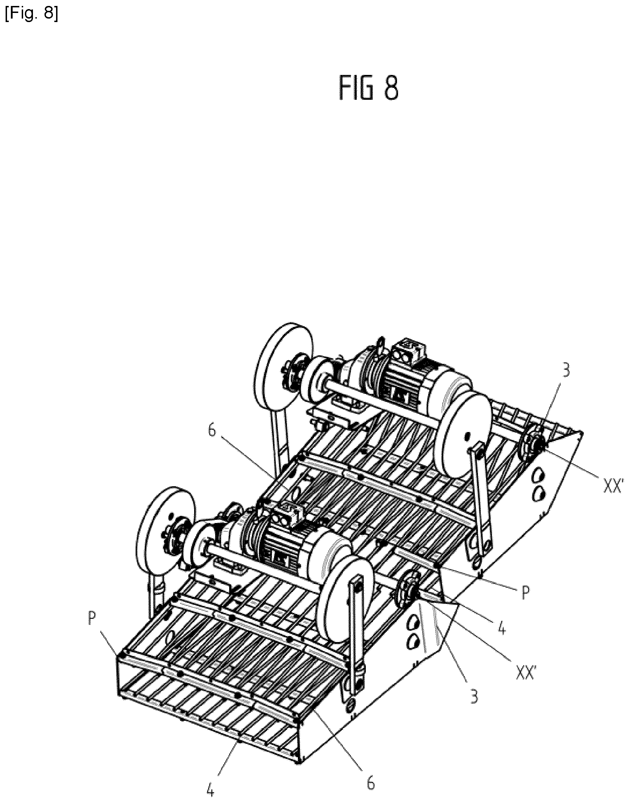

[Fig. 8] représente une vue partielle en perspective d'une installation conforme à l'invention ;
[Fig. 9] représente une vue partielle en perspective d'une installation conforme à l'invention dont les éléments d'éraflage mobiles des érafloirs sont des éléments d'éraflage rotatifs ;
[Fig. 10] représente une vue schématique d'un élément d'éraflage mobile oscillant au cours de son déplacement à pivotement ;
[Fig. 11] représente une vue schématique d'un élément d'éraflage mobile rotatif au cours de son déplacement en rotation.

Comme mentionné ci-dessus, l'invention concerne un procédé de traitement de fruits récoltés en grappe, en particulier de raisins issus de vendange, et une installation de traitement de fruits récoltés en grappe, notamment pour la mise en oeuvre du procédé.

De manière générale, le procédé de traitement de fruits récoltés en grappe met en oeuvre au moins deux érafloirs, avec chaque érafloir 2 comprenant une entrée 3, une première sortie 4 et une deuxième sortie 5, ainsi qu'au moins un élément 6 d'éraflage mobile s'étendant entre l'entrée 3 et la première sortie 4 de l'érafloir 2, et un dispositif 7 d'entraînement en déplacement du ou des éléments 6 d'éraflage mobiles.

Chaque élément 6 d'éraflage mobile de chaque érafloir 2 est un élément configuré pour générer, sous l'effet de son déplacement, une force ou action d'éraflage, fonction au moins de la vitesse de déplacement dudit élément 6 d'éraflage.

Le procédé comprend une étape de positionnement en série desdits érafloirs 2 pour obtenir une ligne d'érafloirs 2 dans laquelle la première sortie 4 de chaque érafloir 2 alimente l'entrée de l'érafloir 2 disposé le plus proche en aval, c'est-à-dire immédiatement en aval, pour les ou au moins deux des érafloirs 2 de ladite série, et une étape d'entraînement en déplacement des éléments 6 d'éraflage à une vitesse de déplacement prise au niveau de la première sortie 4 de chaque érafloir 2 est différente d'un érafloir à un autre, la valeur de la vitesse de déplacement du au moins un élément 6 d'éraflage de l'érafloir disposé en amont pris suivant la direction amont/aval le long de la ligne d'érafloirs 2 étant inférieure à la valeur de la vitesse de déplacement du au moins un élément 6 d'éraflage de l'érafloir 2 disposé en aval, pour permettre de générer, au niveau de la première sortie 4 desdits érafloirs 2, une action d'éraflage qui, suivant la direction amont/aval, croît d'un érafloir 2 à l'autre, le long de la ligne d'érafloirs 2 comme cela sera décrit plus en détail ci-après.

L'installation 1 permettant notamment la mise en oeuvre d'un tel procédé comprend donc au moins deux érafloirs 2 disposés en série pour former, depuis le premier érafloir 2 de la série dit amont, en direction du dernier érafloir 2 de la série dit aval, une ligne d'érafloirs 2 avec la première sortie de chaque érafloir 2 communiquant avec l'entrée 3 de l'érafloir 2 le plus proche disposé en aval, l'amont et l'aval étant pris par référence au sens de déplacement des produits le long de la ligne d'érafloirs 2.

Bien que dans les exemples représentés, la ligne d'érafloirs 2 ne comprenne que deux érafloirs 2, l'invention s'applique également à des installations 1 comprenant un nombre d'érafloirs supérieur à deux.

L'entrée 3 du premier érafloir 2 de la série, c'est-à-dire l'érafloir le plus en amont pris par rapport au sens de circulation des produits le long de la ligne d'érafloirs forme l'entrée d'admission des produits à traiter à l'intérieur de la ligne d'érafloirs 2.

Les produits cheminent à l'intérieur de l'érafloir 2, le long du au moins un élément 6 d'éraflage mobile s'étendant entre l'entrée 3 et la première sortie 4 dudit érafloir 2. Une partie des produits est, au cours de ce cheminement, évacuée à travers la deuxième sortie 5 de l'érafloir 2. La deuxième sortie 5 de l'érafloir 2 est disposée entre l'entrée 3 et la première sortie 4 de l'érafloir 2. Les produits non évacués à travers la deuxième sortie 5 de l'érafloir 2 sont évacués de l'érafloir 2 par la première sortie 4 de l'érafloir 2, et alimentent l'entrée 3 de l'érafloir 2 le plus proche disposé en aval.

Le même processus se produit pour cet érafloir 2 aval. Ainsi, les produits cheminent à l'intérieur de l'érafloir 2, le long du au moins un élément 6 d'éraflage mobile s'étendant entre l'entrée 3 et la première sortie 4 dudit érafloir 2. Une partie des produits est, au cours de ce cheminement, évacuée à travers la deuxième sortie 5 de l'érafloir 2. La deuxième sortie 5 de l'érafloir 2 est disposée entre l'entrée 3 et la première sortie 4 de l'érafloir 2. Les produits non évacués à travers la deuxième sortie de l'érafloir 2 sont évacués de l'érafloir 2 par la première sortie 4 de l'érafloir 2. Bien évidemment, la première sortie 4 de ce deuxième érafloir 2 aval n'alimente pas l'entrée 3 d'un érafloir 2 disposé encore en aval, lorsque la ligne d'érafloirs ne comporte que deux érafloirs. Pour assurer une bonne communication entre la première sortie 4 d'un érafloir 2 et l'entrée 3 de l'érafloir 2 aval le plus proche, une jupe entourant l'entrée 3 de l'érafloir aval peut être prévue.

Au niveau de chaque deuxième sortie 5 d'érafloir, les fruits peuvent être collectés. La première sortie 4 d'un érafloir 2 sert à l'évacuation des rafles et autres déchets, mais également à celle des fruits non détachés des rafles, d'où l'intérêt de la mise en série des érafloirs 2 et la force variable d'éraflage pour permettre de détacher progressivement l'ensemble des fruits des rafles, en faisant croître la force d'éraflage mesurée au niveau de la première sortie des érafloirs le long de la ligne d'érafloirs pour permettre de détacher les fruits les moins mûrs qui sont plus solidement attachés aux rafles au niveau du ou des érafloirs aval.

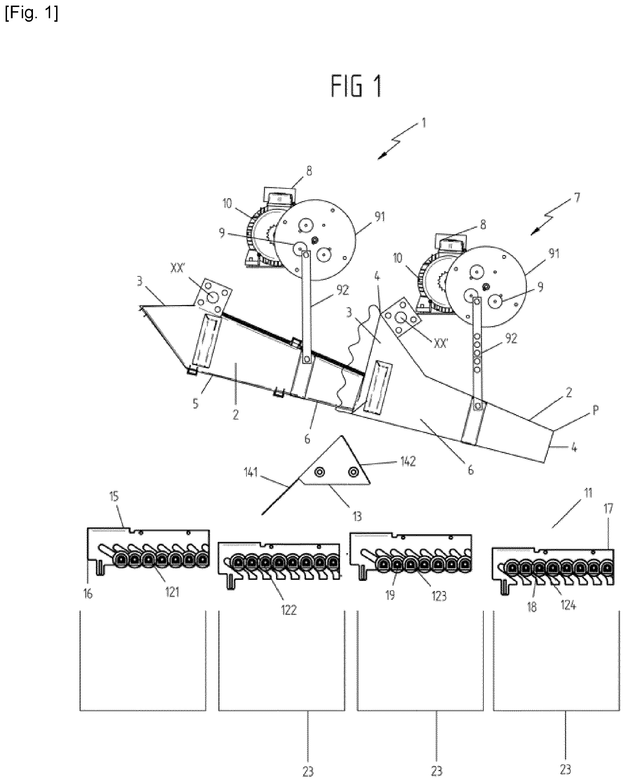

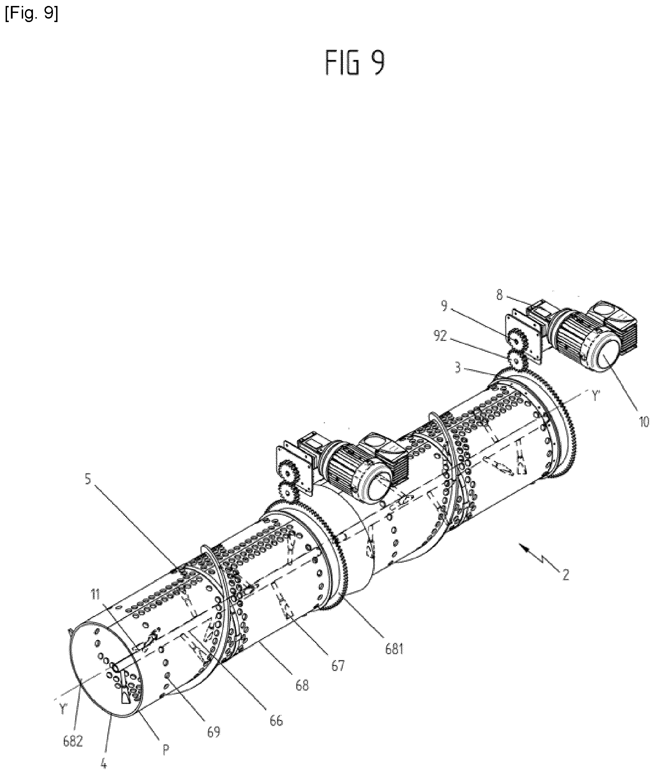

Les érafloirs 2 de l'installation appartiennent à la famille des érafloirs 2 oscillants, comme illustré par exemple à la figure 1, ou à celle des érafloirs 2 rotatifs comme illustré par exemple à la figure 9 ou aux deux familles avec l'un des érafloirs de l'installation étant un érafloir oscillant et l'autre des érafloirs de l'installation étant un érafloir rotatif.

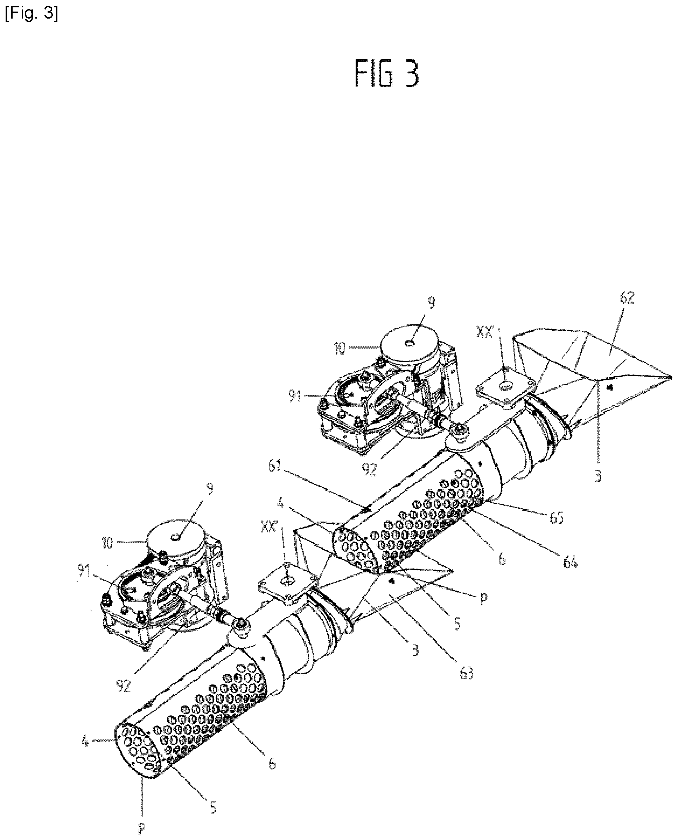

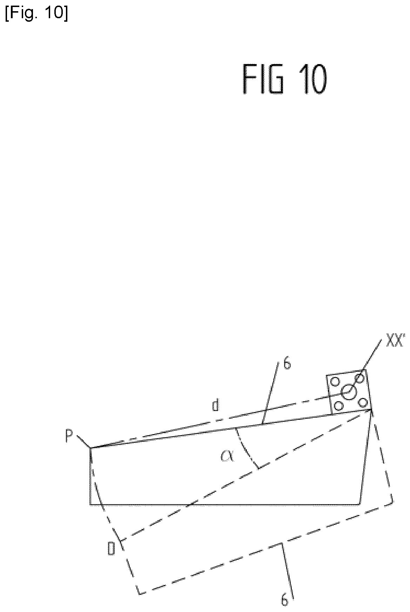

Dans le cas des érafloirs 2 oscillants, le ou au moins un élément 6 d'éraflage mobile de l'érafloir 2 est un élément oscillant animé d'un mouvement d'oscillation périodique qui peut être un mouvement d'oscillation suivant une direction verticale en monte et baisse comme dans la figure 1, ou suivant une direction latérale droite/gauche comme dans la figure 3, sans sortir du cadre de l'invention. Ce mouvement d'oscillation s'opère par pivotement autour d'un axe de pivotement représenté en XX' à la figure 10. Ce mouvement de pivotement s'opère entre deux positions extrêmes.

Dans les exemples représentés aux figures 1 à 3, l'élément 6 d'éraflage oscillant a la forme d'une boîte 61, c'est-à-dire d'un corps tubulaire présentant deux extrémités 62 et 63 opposées ouvertes.

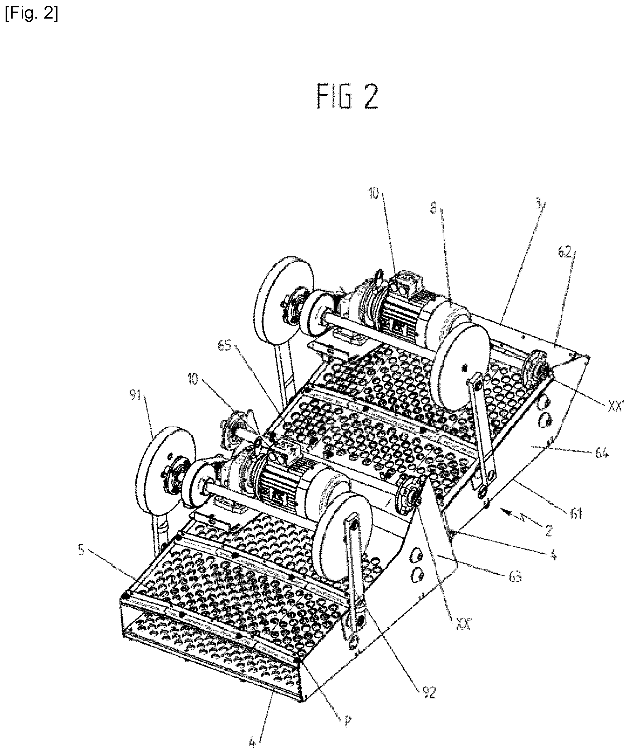

Dans les figures 1 et 2, la boîte 61 est de section quadrangulaire. Dans l'exemple de la figure 3, la boîte 61 est de section transversale circulaire. Cette boîte 61 oscillante présente une paroi 64 latérale périphérique de liaison des extrémités 62 et 63 ouvertes de la boîte 61 munie d'ouvertures 65 traversantes. Ainsi, l'une des extrémités, à savoir l'extrémité représentée en 62 de la boîte 61 forme l'entrée 3 de l'érafloir, l'extrémité opposée représentée en 63 aux figures de la boîte forme la première sortie 4 de l'érafloir et les ouvertures 65 traversantes de la paroi 64 latérale périphérique de la boîte 61 forment la deuxième sortie 5 de l'érafloir 2.

Les ouvertures 65 traversantes sont dimensionnées pour laisser passer une dimension maximale de fruits, les fruits de dimension supérieure aux ouvertures ou restés accrochés aux rafles sont évacués à travers la première sortie 4 de l'érafloir, pour être soumis à un nouvel éraflage lorsque l'érafloir 2 n'est pas le dernier érafloir de la ligne d'érafloirs 2.

La boîte 61 oscillante est couplée à un châssis 22 de l'installation, de manière à pouvoir être entraînée en déplacement à pivotement autour de l'axe XX' pivot ou d'oscillation s'étendant transversalement à l'axe longitudinal de la boîte, cet axe longitudinal de la boîte correspondant à l'axe reliant les extrémités 62 et 63 ouvertes de la boîte 61.

Cet axe XX' pivot peut être disposé à l'entrée de l'érafloir ou en amont de l'entrée 3 de l'érafloir pris par rapport au sens de déplacement des produits dans l'érafloir.

L'axe XX' de pivotement ou d'oscillation peut être un axe réel ou virtuel.

On comprend qu'ainsi, le mouvement de la boîte est minimal, à proximité de l'axe XX' de pivotement ou d'oscillation, et augmente à mesure que le fruit approche de l'extrémité de la boîte, formant la première sortie de l'érafloir.

Dans l'exemple représenté aux figures 1 et 2, cet axe est dit horizontal. Ainsi, la première sortie 4 de l'érafloir se déplace vers le haut et vers le bas à l'état entraîné en déplacement à pivotement de la boîte par le dispositif 7 d'entraînement en déplacement de l'élément 6 d'éraflage mobile dudit érafloir.

Dans la solution représentée à la figure 3, l'axe XX' de pivotement ou d'oscillation est vertical. Ainsi, la première sortie de l'érafloir se déplace vers la droite ou vers la gauche, à l'état entraîné en déplacement à pivotement de la boîte par le dispositif 7 d'entraînement.

De manière similaire à ce qui a été décrit ci-dessus, l'action d'éraflage réalisée par les mouvements de la boîte est minimale, à proximité de l'axe de pivotement ou d'oscillation de la boîte, et augmente à mesure que le fruit approche de l'autre extrémité de la boîte correspondant à la première sortie 4 de l'érafloir.

En variante, et comme illustré à la figure 9, l'élément 6 d'éraflage mobile de l'érafloir peut être un élément d'éraflage rotatif monté à rotation autour d'un axe YY' de rotation. Cet élément 6 d'éraflage se présente ainsi sous forme d'un arbre 66 rotatif équipé de doigts 67 radiaux. L'arbre 66 rotatif est disposé à l'intérieur d'un corps 68 tubulaire ouvert à chacune de ses extrémités, représentées en 681 et 682 aux figures. L'arbre 66 rotatif s'étend depuis l'une des extrémités 681 ouverte du corps 68 jusqu'à l'autre extrémité 682 du corps 68.

Ce corps 68 tubulaire est délimité par une paroi périphérique munie d'ouvertures 69 traversantes.

L'extrémité ouverte du corps 68 représenté en 681 aux figures forme l'entrée 3 de l'érafloir 2. L'autre extrémité ouverte du corps 68 représentée en 682 aux figures forme la première sortie 4 de l'érafloir 2. Les ouvertures 69 traversantes de la paroi périphérique de délimitation du corps 68 forment la deuxième sortie 5 de l'érafloir 2.

Indépendamment de la conception de l'élément 6 d'éraflage mobile, l'érafloir 2 comprend un dispositif 7 d'entraînement des éléments 6 d'éraflage mobiles de l'érafloir.

Pour au moins deux, en l'occurrence ici pour les deux érafloirs 2 de la ligne d'érafloirs 2, l'installation 1 comprend à chaque fois un dispositif 7 d'entraînement en déplacement de l'élément 6 d'éraflage. Ce dispositif 7 d'entraînement en déplacement de l'élément 6 d'éraflage comprend au moins un moteur 10, de préférence électrique, un mécanisme 9 de transmission du mouvement de rotation du ou des moteurs 10 à l'élément 6 d'éraflage dudit érafloir et une commande 8 dudit moteur 10.

Dans le cas d'un élément 6 d'éraflage oscillant comme illustré aux figures 1 à 3, le mécanisme 9 de transmission de mouvement est un entraînement 91 à excentrique. Cet entraînement 91 à excentrique comprend un disque à excentrique entraîné en rotation par le moteur 10 et une liaison 92, telle qu'une bielle reliant le disque à l'élément d'éraflage oscillant, c'est-à-dire ici à la boîte 61 oscillante.

Cette bielle a une extrémité qui est reliée en rotation de manière excentrée, c'est-à-dire en un emplacement écarté du centre de rotation du disque, au disque et une extrémité opposée qui est reliée en rotation à la boîte au niveau d'un point de connexion adapté pour fournir à la boîte 61 un mouvement oscillant au niveau de sa première sortie, soit vers le bas et vers le haut comme illustré aux figures 1 et 2, soit vers la droite et la gauche, comme illustré à la figure 3.

Le détail d'un érafloir à mouvement oscillant en monte et baisse ne sera pas fourni, car un tel érafloir est bien connu, comme l'illustre le brevet EP 3 132 694. De même, le détail d'un érafloir à mouvement oscillant droite/gauche ne sera pas fourni, car un tel érafloir est bien connu, comme l'illustre le brevet FR 2 963 909.

Les dispositifs 7 d'entraînement des éléments 6 d'éraflage oscillants des érafloirs 2 amont et aval sont configurés pour permettre un entraînement en déplacement de l'élément 6 d'éraflage oscillant de l'érafloir 2 disposé en amont à une vitesse de déplacement inférieure à la vitesse de déplacement de l'élément 6 d'éraflage de l'érafloir 2 disposé en aval. Cette vitesse de déplacement est prise au niveau de la première sortie 4 de chaque érafloir 2, en un point P de chaque élément 6 d'éraflage oscillant le plus proche de l'axe d'oscillation dudit élément 6 d'éraflage. Cette vitesse de déplacement de chaque élément 6 d'éraflage oscillant est exprimée en mètres par seconde et est définie par V= DIT avec D exprimé en mètres correspondant à la distance dite angulaire parcourue par ledit point P en un déplacement entre les deux positions extrêmes de l'élément 6 d'éraflage oscillant et T exprimé en secondes correspondant à la durée nécessaire audit point pour parcourir ladite distance. La figure 10 illustre un même élément 6 d'éraflage oscillant, d'une part en trait plein, d'autre part en pointillés pour montrer son déplacement entre deux positions extrêmes de pivotement. La distance D parcourue au cours de ce déplacement entre les deux positions extrêmes est représentée de même que le point P par référence à l'axe XX' de pivotement. Cette distance D dite angulaire parcourue, au niveau de la première sortie 4 chaque érafloir, par le point P de l'élément 6 d'éraflage oscillant le plus proche de l'axe d'oscillation dudit élément 6 d'éraflage, en un déplacement entre les deux positions extrêmes de l'élément 6 d'éraflage oscillant est égale à α × d avec α exprimé en radians et correspondant à l'angle parcouru par ledit point en un déplacement entre les deux positions extrêmes de l'élément 6 d'éraflage mobile et d exprimée en mètres et correspondant à la distance entre ledit point et l'axe d'oscillation dudit élément 6 d'éraflage mobile.

Pour permettre un entraînement en déplacement des éléments 6 d'éraflage mobiles des érafloirs à une vitesse de déplacement prise, à chaque fois, au niveau de la première sortie 4 des érafloirs 2, différente d'un érafloir à l'autre, plusieurs solutions peuvent être envisagées.

Dans la version la plus simple, la commande 8 du ou des moteurs 10 du dispositif 7 d'entraînement de l'un des érafloirs 2 est distincte de la commande 8 du ou des moteurs 10 du dispositif 7 d'entraînement de l'autre des érafloirs 2, pour permettre de commander le ou les moteurs 10 du dispositif 7 d'entraînement de l'un des érafloirs 2 à une vitesse différente de celle du ou des moteurs 10 du dispositif 7 d'entraînement de l'autre des érafloirs 2.

Le ou les moteurs 10 du dispositif 7 d'entraînement de l'un des érafloirs sont des moteurs à vitesse variable, et la commande 8 du ou des moteurs 10 est un variateur de vitesse.

En variante, il peut être prévu, pour chaque dispositif 7 d'entraînement, un ou des moteurs à une seule vitesse de rotation, mais dont la vitesse de rotation est différente entre le moteur équipant l'un des érafloirs et le ou les moteurs équipant l'autre érafloir.

En variante encore, les mécanismes 9 de transmission des dispositifs 7 d'entraînement des érafloirs 2 peuvent être configurés, c'est-à-dire conformés et dimensionnés, pour présenter un rapport de transmission de la vitesse de rotation du moteur 10 audit au moins un élément 6 d'éraflage de l'érafloir 2 différent d'un érafloir 2 à l'autre. Pour ce faire, il suffit par exemple de faire varier la position de la bielle par rapport au disque.

Toutes ces solutions permettent une vitesse de déplacement de l'élément 6 d'éraflage mobile prise au niveau de la première sortie 4 dudit érafloir 2 différente d'un érafloir 2 à un autre, pour permettre de disposer d'une action d'éraflage moindre au niveau de la première sortie du premier érafloir de la ligne et au contraire, une action d'éraflage accrue au niveau de la première sortie de l'érafloir disposé en aval du premier érafloir, pour permettre un détachement de produits moins mûrs des grappes au niveau du deuxième érafloir, ce que ne permettait pas le premier érafloir.

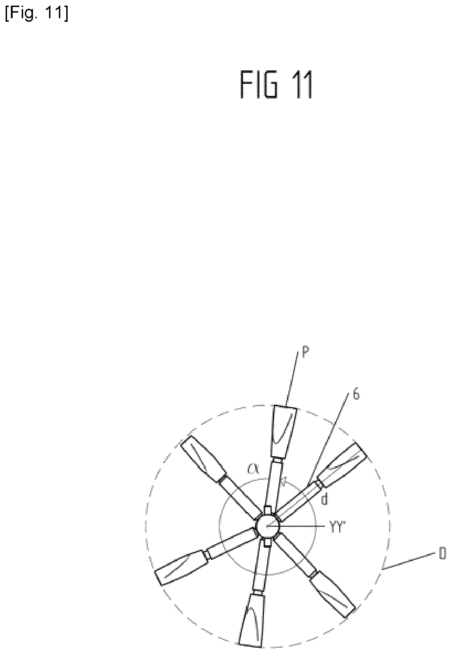

De manière similaire, dans le cas d'éléments 6 d'éraflage rotatifs, les dispositifs 7 d'entraînement des éléments 6 d'éraflage rotatifs des érafloirs 2 amont et aval sont configurés pour permettre un entraînement en déplacement de l'élément 6 d'éraflage rotatif de l'érafloir 2 disposé en amont à une vitesse de déplacement inférieure à la vitesse de déplacement de l'élément 6 d'éraflage rotatif de l'érafloir 2 disposé en aval. Cette vitesse de déplacement est prise au niveau de la première sortie 4 de chaque érafloir 2, en un point de chaque élément 6 d'éraflage rotatif le plus éloigné de l'axe YY' de rotation dudit élément 6 d'éraflage. Cette vitesse de déplacement de chaque élément 6 d'éraflage oscillant est exprimée en mètres par seconde et est définie par V= DIT avec D exprimé en mètres correspondant à la distance dite angulaire parcourue par ledit point P en un tour de rotation et T exprimé en secondes correspondant à la durée nécessaire audit point pour parcourir ladite distance. La figure 11 illustre un élément 6 d'éraflage rotatif dont la distance D parcourue par le point P sur un tour de rotation est représentée en pointillé. Cette distance D dite angulaire parcourue, en un tour de rotation, par le point P de l'élément 6 d'éraflage rotatif le plus éloigné de l'axe de rotation et correspondant ici à l'extrémité du doigt le plus long au niveau de la première sortie de l'érafloir 2 est égale à α × d avec α exprimé en radian et correspondant à l'angle parcouru par ledit point en un tour de rotation de l'élément d'éraflage mobile et d exprimée en mètres et correspondant à la distance entre ledit point et l'axe de rotation dudit élément 6 d'éraflage rotatif, c'est-à-dire au rayon le plus grand de l'élément 6 d'éraflage rotatif au niveau de la première sortie de l'érafloir 2.

Dans le cas d'un élément 6 d'éraflage rotatif tel qu'illustré à la figure 3, le mécanisme 9 de transmission du mouvement de rotation du moteur 10 à l'élément 6 d'éraflage peut être un mécanisme 9 de transmission à courroie ou à engrenage ou autres. Le moteur peut être un moteur à vitesse variable et la commande peut être formée par un variateur de vitesse.

En variante le mécanisme 9 de transmission peut présenter un rapport de transmission de mouvement distinct, d'un érafloir à l'autre.

Toutes ces solutions permettent à nouveau d'entraîner l'arbre 66 d'un érafloir à une vitesse de rotation différente de l'arbre 66 de l'autre ou d'un autre des érafloirs de la ligne, pour obtenir au niveau de la première sortie desdits érafloirs, des actions d'éraflage différentes et en particulier une action d'éraflage plus forte au niveau de la première sortie d'un érafloir disposé en aval du premier érafloir de la série d'érafloirs, comparativement à l'action d'éraflage au niveau de la première sortie de ce premier érafloir de ladite série d'érafloirs.

Pour illustrer ces propos, on suppose, dans l'installation telle qu'illustrée à la figure 3, que le moteur 10 du dispositif 7 d'entraînement de l'élément 6 d'éraflage oscillant du premier érafloir de la ligne d'érafloirs tourne à une vitesse de 540 tours par minute, tandis que le moteur 10 du dispositif 7 d'entraînement de l'élément d'éraflage oscillant de l'érafloir disposé en aval du premier érafloir de la série tourne à une vitesse de 1620 tours par minute, que l'amplitude de l'oscillation, c'est-à-dire la distance D parcourue par le point P de l'élément 6 d'éraflage de chaque érafloir est égale à 189 mm pour chaque érafloir et que la durée T pour parcourir cette distance D par le point P est de 55 ms pour l'élément 6 d'éraflage de l'érafloir amont et de 18 ms pour l'élément 6 d'éraflage de l'érafloir aval. On suppose une baie de raisin dont la masse est égale à 2 grammes. La vitesse V de la boîte de l'érafloir amont prise au niveau de la première sortie de la boîte au point P, est donc égale à 341 m/s tandis que la vitesse V de la boîte du deuxième érafloir ou érafloir aval prise au niveau de la première sortie de la boîte au point P au niveau de la première sortie du deuxième érafloir est égale à 1024 m/s.

On constate ainsi que la valeur de la vitesse V de déplacement de l'élément 6 d'éraflage prise au niveau de la première sortie des érafloirs croît d'un érafloir à l'autre, suivant la direction amont/aval, du fait d'une vitesse de rotation des moteurs différente. De même, la force d'éraflage croît.

Ainsi, les baies les plus mûres peuvent être collectées au niveau du premier érafloir de la série d'érafloirs, tandis que les baies moins mûres sont collectées au niveau du deuxième érafloir de la série d'érafloirs.

Pour parfaire l'installation 1 de traitement, ladite installation 1 de traitement comprend un dispositif de tri 11 .

Ce dispositif de tri 11 peut être un dispositif de tri 11 par criblage, disposé sous le ou les éléments 6 d'éraflage mobiles des érafloirs 2.

Le dispositif de tri 11 comprend au moins deux zones de tri disposées en série le long de la ligne d'érafloirs, sous la ligne d'érafloirs 2.

Dans l'exemple représenté à la figure 1, le dispositif de tri 11 comprend quatre zones de tri représentées en 121, 122, 123 et 124 aux figures. Ces zones de tri sont disposées en série le long d'un trajet de circulation défini par la succession entrée 3/première sortie 4 des érafloirs 2 disposés en série, de sorte que la zone de tri dite amont, représentée en 121 aux figures s'étend en amont de la ou les autres zones de tri représentées en 122, 123, 124 aux figures et dites aval.

La zone 121 de tri amont, qui s'étend au-dessous et à la verticale du premier érafloir 2 de la série est en communication directe avec ledit premier érafloir 2, pour une alimentation directe par gravité de la zone 121 de tri amont, à partir du premier érafloir 2.

L'une des zones de tri aval représentée en 122 aux figures est une zone de tri à alimentation indirecte. Cette zone 122 de tri aval est séparée des érafloirs 2 par un élément 13 séparateur. Cette zone 122 de tri aval est disposée dans le prolongement de la zone 121 de tri qui la précède, pour être alimentée exclusivement à partir de la zone de tri qui la précède. Il en résulte la possibilité, au niveau de ses deux premières zones 121 et 122 de tri, d'éliminer dans la première zone de tri les fruits les plus mûrs et les plus petits, puis au niveau de la seconde zone de tri, les fruits les plus mûrs et de taille plus importante.

Dans les exemples représentés, l'élément 13 séparateur surmontant la zone 121 de tri à alimentation indirecte a la forme d'un dièdre ouvert en direction de la zone 122 de tri à alimentation indirecte. Ce dièdre forme un toit à deux pentes au-dessus de la zone 122 de tri à alimentation indirecte. Ainsi, ce dièdre délimite depuis son sommet deux plans 141 et 142 inclinés à pente descendante, l'un représenté en 141 aux figures en direction de la zone 121 de tri disposée en amont de la zone 122 de tri à alimentation indirecte, l'autre représenté en 142 aux figures en direction de la zone 123 de tri disposée en aval de la zone 122 de tri à alimentation indirecte. Cet élément 13 séparateur, qui surmonte la zone 122 de tri à alimentation indirecte est un élément réglable en position dans le sens d'un décalage axial le long d'une ligne parallèle à la ligne formée par la succession de zones 121, 122, 123, 124 de tri disposées en série.

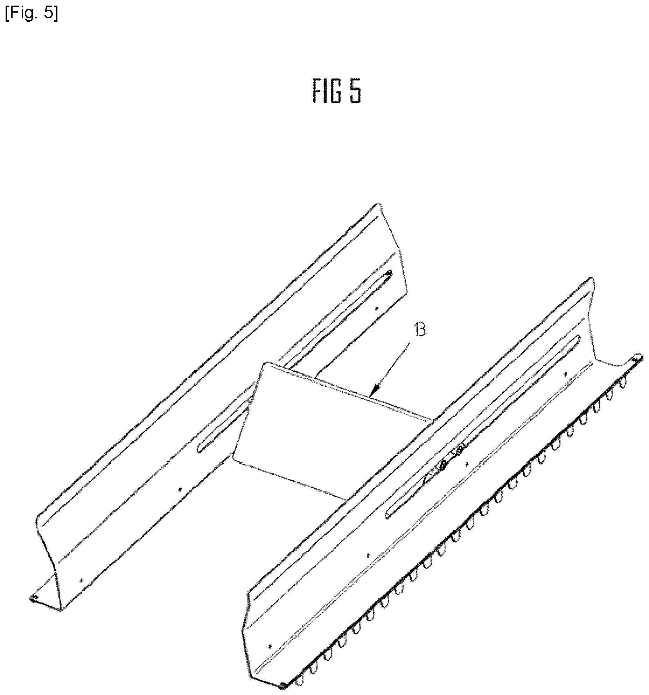

Le détail de ce séparateur est représenté à la figure 5, où le dièdre est équipé de pions s'insérant dans deux rails parallèles à glissière pour un déplacement à coulissement du séparateur dans le sens d'un rapprochement ou d'un écartement d'une extrémité de la ligne formée par la succession de zones de tri.

Dans les exemples représentés, et comme visible à la figure 1, chaque zone 121, 122, 123, 124 de tri délimite une surface 15 de tri formée entre un bord 16 amont et un bord 17 aval, d'une pluralité de rouleaux 18 adjacents parallèles.

Le dispositif 11 de tri comprend, au niveau de chaque zone de tri, un mécanisme 19 d'entraînement en rotation des rouleaux 18 dans un même sens de rotation pour permettre un déplacement des fruits récoltés en grappe à trier au-dessus de ladite surface 15 de tri suivant une direction d'avance perpendiculaire à l'axe des rouleaux 18 depuis le bord 16 amont en direction du bord 17 aval.

Les rouleaux sont, au niveau de chaque zone de tri, des rouleaux 18 calibreurs conformés ou disposés pour ménager au moins une ouverture ou une pluralité d'ouvertures calibrées entre deux rouleaux 18 voisins pour permettre un passage et une chute des fruits récoltés en grappe à trier, les fruits récoltés en grappe à trier de dimension supérieure aux ouvertures restant au-dessus de la surface 15 de tri et étant évacués au niveau du bord 17 aval de celle-ci.

Dans l'exemple représenté, le mécanisme 19 d'entraînement en rotation des rouleaux 18 d'une zone de tri comprend un organe menant moteur de transmission sans fin, commun à l'ensemble des rouleaux 18 de la zone de tri, et au niveau de chaque rouleau 18, un organe mené monté solidaire en rotation et en prise par engrènement avec l'organe menant moteur.

L'organe menant moteur est par exemple une chaîne de transmission sans fin et chaque organe mené est un pignon, ou une roue dentée, monté à une extrémité d'un rouleau 18, de manière solidaire en rotation dudit rouleau.

La chaîne s'enroule autour de chacun des pignons ou roues dentées dudit rouleau, de manière à provoquer, parallèlement à son entraînement en rotation sur une trajectoire en boucle, l'entraînement en rotation desdits organes menés.

Les ouvertures entre deux rouleaux voisins d'une zone de tri sont de dimensions différentes d'une zone de tri à une autre, pour former des cribles aux caractéristiques de criblage différenciées en fonction du calibre souhaité.

Généralement, lorsque les deux zones de tri sont disposées sous un même érafloir comme dans l'exemple représenté à la figure 1, la première zone de tri délimite des ouvertures de dimension inférieure à celle des ouvertures de la deuxième zone de tri pris dans le sens amont aval.

Grâce à l'installation telle que décrite ci-dessus, il est possible, de manière simple, de trier les fruits à la fois en fonction de la dimension et de la maturité.

Pour permettre la collecte desdits fruits, le dispositif de tri 11 comprend au moins deux récipients 23 de collecte disposés chacun sous une ou plusieurs zones de tri et associés l'un à une ou plusieurs zones de tri et l'autre ou un autre à une ou plusieurs autres zones de tri.

Dans l'exemple représenté à la figure 1, il est prévu quatre bacs de collecte, chaque bac de collecte 23 étant associé à une zone de tri distincte. Le premier bac de collecte permet ainsi de collecter des fruits mûrs de petite dimension, le second bac des fruits mûrs de plus grande dimension, le troisième bac des fruits moins mûrs de petite dimension et le quatrième bac des fruits moins mûrs de plus grande dimension.

## Revendications

1. Procédé de traitement de fruits récoltés en grappes au moyen d'au moins deux érafloirs (2), chaque érafloir (2) comprenant :
- une entrée (3), une première sortie (4) et une deuxième sortie (5),
- au moins un élément (6) d'éraflage mobile s'étendant entre l'entrée (3) et la première sortie (4) dudit érafloir (2) et
- un dispositif (7) d'entraînement en déplacement dudit au moins un élément (6) d'éraflage mobile, ledit au moins un élément (6) d'éraflage mobile de chaque érafloir (2) étant un élément rotatif, ou respectivement oscillant, configuré pour générer, sous l'effet de son déplacement à rotation autour d'un axe de rotation, ou respectivement à pivotement autour d'un axe de pivotement entre deux positions extrêmes, une force d'éraflage fonction au moins de la vitesse de déplacement dudit élément (6) d'éraflage mobile, **caractérisé en ce que** ledit procédé comprend une étape de positionnement en série à la suite l'un de l'autre desdits érafloirs (2) pour former depuis le premier érafloir (2) de la série dit amont en direction du dernier érafloir (2) de la série dit aval une ligne d'érafloirs (7) avec la première sortie (4) de chaque érafloir (2) communiquant avec l'entrée (3) de l'érafloir (2) disposé en aval et **en ce que** pour au moins deux des érafloirs (2) de la série, ledit procédé comprend, au moyen des dispositifs (7) d'entraînement, une étape d'entraînement en déplacement du au moins un élément (6) d'éraflage de l'érafloir (2) disposé en amont pris suivant la direction amont/aval le long de la ligne d'érafloirs (2) à une vitesse de déplacement inférieure à la vitesse de déplacement du au moins un élément (6) d'éraflage de l'érafloir (2) disposé en aval, cette vitesse de déplacement étant prise au niveau de la première sortie (4) de chaque érafloir (2), en un point (P) du ou de chaque élément (6) d'éraflage mobile le plus éloigné de l'axe de rotation ou le plus proche de l'axe d'oscillation dudit élément (6) d'éraflage, cette vitesse de déplacement de chaque élément (6) d'éraflage mobile exprimée en mètres par seconde étant définie par V= DIT avec D exprimé en mètres correspondant à la distance dite angulaire parcourue par ledit point (P) en un tour de rotation ou en un déplacement entre les deux positions extrêmes de l'élément (6) d'éraflage mobile et T exprimé en secondes correspondant à la durée nécessaire audit point (P) pour parcourir ladite distance.

2. Procédé de traitement de fruits récoltés en grappes selon la revendication 1, **caractérisé en ce que** la distance (D) dite angulaire parcourue, par le point (P) du ou de chaque élément (6) d'éraflage mobile le plus éloigné de l'axe de rotation ou le plus proche de l'axe d'oscillation dudit élément (6) d'éraflage, en un tour de rotation ou en un déplacement entre les deux positions extrêmes de l'élément (6) d'éraflage mobile est égale à α × d avec α exprimé en radians et correspondant à l'angle parcouru par ledit point en un tour de rotation ou en un déplacement entre les deux positions extrêmes de l'élément (6) d'éraflage mobile et d exprimée en mètres et correspondant à la distance entre ledit point et l'axe d'oscillation ou de rotation dudit élément (6) d'éraflage mobile.

3. Installation (1) de traitement de fruits récoltés en grappes, ladite installation (1) comprenant au moins deux érafloirs (2), chaque érafloir (2) comprenant une entrée (3), une première sortie (4) et une deuxième sortie (5), au moins un élément (6) d'éraflage mobile s'étendant entre l'entrée (3) et la première sortie (4) dudit érafloir (2) et un dispositif (7) d'entraînement en déplacement dudit au moins un élément (6) d'éraflage mobile, ledit au moins un élément (6) d'éraflage mobile de chaque érafloir (2) étant un élément rotatif, ou respectivement oscillant, configuré pour générer sous l'effet de son déplacement à rotation autour d'un axe de rotation, ou respectivement à pivotement autour d'un axe de pivotement entre deux positions extrêmes, une force d'éraflage fonction au moins de la vitesse de déplacement dudit élément (6) d'éraflage mobile, **caractérisée en ce que** les érafloirs (2) sont disposés en série à la suite l'un de l'autre pour former depuis le premier érafloir (2) de la série dit amont en direction du dernier érafloir (2) de la série dit aval une ligne d'érafloirs (2) avec la première sortie (4) de chaque érafloir (2) communiquant avec l'entrée (3) de l'érafloir (2) disposé en aval et,
**en ce que** pour au moins deux des érafloirs (2) de la série, les dispositifs (7) d'entraînement des éléments (6) d'éraflage mobiles desdits érafloirs (2) sont configurés pour permettre un entraînement en déplacement du au moins un élément (6) d'éraflage mobile de l'érafloir (2) disposé en amont à une vitesse de déplacement inférieure à la vitesse de déplacement du au moins un élément (6) d'éraflage de l'érafloir (2) disposé en aval, cette vitesse de déplacement étant prise au niveau de la première sortie (4) de chaque érafloir (2), en un point (P) du ou de chaque élément (6) d'éraflage mobile le plus éloigné de l'axe de rotation ou le plus proche de l'axe d'oscillation dudit élément (6) d'éraflage, cette vitesse de déplacement de chaque élément (6) d'éraflage mobile exprimée en mètres par seconde étant définie par V= DIT avec D exprimé en mètres correspondant à la distance dite angulaire parcourue par ledit point (P) en un tour de rotation ou en un déplacement entre les deux positions extrêmes de l'élément (6) d'éraflage mobile et T exprimé en secondes correspondant à la durée nécessaire audit point pour parcourir ladite distance.

4. Installation (1) de traitement de fruits récoltés en grappes selon la revendication 3, **caractérisée en ce que** les dispositifs (7) d'entraînement des ou au d'au moins deux des érafloirs (2), qui sont configurés pour permettre un entraînement en déplacement du au moins un élément (6) d'éraflage mobile de l'érafloir (2) disposé en amont à une vitesse de déplacement inférieure à la vitesse de déplacement du au moins un élément (6) d'éraflage de l'érafloir (2) disposé en aval, avec l'amont et l'aval pris suivant la direction amont/aval le long de la ligne d'érafloirs (2), comprennent chacun au moins un moteur (10), un mécanisme (9) de transmission du mouvement de rotation du au moins un moteur (10) audit au moins un élément (6) d'éraflage dudit érafloir (2) et une commande (8) dudit moteur (10).

5. Installation (1) de traitement de fruits récoltés en grappes selon la revendication 4, **caractérisée en ce que** les commandes (8) des dispositifs (7) d'entraînement des ou au d'au moins deux des érafloirs (2), qui sont configurées pour permettre de commander un entraînement en déplacement du au moins un élément (6) d'éraflage mobile de l'érafloir (2) disposé en amont à une vitesse de déplacement inférieure à la vitesse de déplacement du au moins un élément (6) d'éraflage de l'érafloir (2) disposé en aval, avec l'amont et l'aval pris suivant la direction amont/aval le long de la ligne d'érafloirs (2), sont distinctes.

6. Installation (1) de traitement de fruits récoltés en grappes selon l'une des revendications 4 ou 5, **caractérisée en ce que** la commande (8) du dispositif (7) d'entraînement d'au moins l'un des érafloirs (2) est un variateur de vitesse configuré pour commander le ou chaque moteur (10) associé au mécanisme (9) de transmission de mouvement à une vitesse variable.

7. Installation (1) de traitement de fruits récoltés en grappes selon l'une des revendications 4 à 6, **caractérisée en ce que** les mécanismes (9) de transmission des dispositifs (7) d'entraînement desdits érafloirs (2) sont configurés, c'est-à-dire conformés et dimensionnés, pour présenter un rapport de transmission de la vitesse de rotation du moteur (10) audit au moins un élément (6) d'éraflage de l'érafloir (2) différent d'un érafloir (2) à l'autre.

8. Installation (1) de traitement de fruits récoltés en grappes selon l'une des revendications 3 à 7, **caractérisée en ce que** le au moins un élément (6) d'éraflage mobile d'au moins l'un des érafloirs (2), qui est un élément (6) d'éraflage oscillant, a la forme d'une boîte (61) oscillante présentant deux extrémités (62, 63) opposées ouvertes et une paroi (64) latérale périphérique de liaison desdites extrémités (62, 63) munie d'ouvertures (65) traversantes, **en ce que** l'une (62) des extrémités (62, 63) de la boîte (61) forme l'entrée (3) de l'érafloir (2), **en ce que** l'extrémité (63) opposée de la boîte (61) forme la première sortie (4) de l'érafloir (2) et **en ce que** les ouvertures (65) traversantes de la paroi (64) latérale périphérique forment la deuxième sortie (5) de l'érafloir (2).

9. Installation (1) de traitement de fruits récoltés en grappes selon l'une des revendications 3 à 8, **caractérisée en ce que** le au moins un élément (6) d'éraflage mobile d'au moins l'un des érafloirs, (2) qui est un élément (6) d'éraflage rotatif, se présente sous forme d'un arbre (66) rotatif équipé de doigts (67) radiaux, ledit arbre (66) rotatif étant disposé à l'intérieur d'un corps (68) tubulaire ouvert à chacune de ses extrémités (681, 682), ledit arbre (66) rotatif s'étendant depuis l'une (681) des extrémités (681, 682) ouvertes dudit corps (68) jusqu'à l'autre extrémité (682) dudit corps (68), ce corps (68) tubulaire étant délimité par une paroi périphérique munie d'ouvertures (69) traversantes, l'une (681) des extrémités (681, 682) ouvertes du corps (68) formant l'entrée (3) de l'érafloir (2), l'autre (682) des extrémités (681, 682) ouvertes du corps (68) formant la première sortie (4) de l'érafloir (2) et les ouvertures (69) traversantes de la paroi périphérique de délimitation du corps (68) formant la deuxième sortie (5) de l'érafloir (2).

10. Installation (1) de traitement de fruits récoltés en grappes selon l'une des revendications 3 à 9, **caractérisée en ce que** l'installation (1) comprend un dispositif de tri (11)

11. Installation (1) de traitement de fruits récoltés en grappes selon la revendication 10, **caractérisée en ce que** le dispositif de tri (11) est un dispositif de tri (11) par criblage disposé sous le ou les éléments (6) d'éraflage mobiles des érafloirs.

12. Installation (1) de traitement de fruits récoltés en grappes selon l'une des revendications 10 ou 11, **caractérisée en ce que** le dispositif de tri (11) comprend au moins deux zones (121, 122, 123, 124) de tri disposées en série le long d'un trajet de circulation défini par la succession entrée (3)/première sortie (4)/entrée (3)/première sortie (4) des érafloirs (2) disposés en série de sorte que l'une (121) des zones (121, 122, 123, 124) de tri dite amont s'étend en amont de la ou les autres zones (122, 123, 124) de tri dites aval, **en ce que** la zone (121) de tri amont, qui s'étend au-dessous et à la verticale du premier érafloir (2) de la série dit amont, est en communication directe avec ledit premier érafloir (2) pour une alimentation directe par gravité de la zone de tri (121) amont à partir du premier érafloir (2) et **en ce que** la ou au moins l'une (122) des zones (122, 123, 124) de tri aval est une zone de tri à alimentation indirecte, cette zone (122) de tri aval étant séparée des érafloirs (2) par au moins un élément (13) séparateur et étant disposée dans le prolongement de la zone de tri (121) qui la précède pour être alimentée exclusivement à partir de la zone de tri qui la précède.

13. Installation (1) de traitement de fruits récoltés en grappes selon la revendication 12, **caractérisée en ce que** l'élément (13) séparateur surmontant la zone (122) de tri à alimentation indirecte a la forme d'un dièdre ouvert en direction de la zone (122) de tri à alimentation indirecte, ce dièdre délimitant depuis son sommet deux plans (141, 142) inclinés à pente descendante l'un (141), en direction d'une zone (121) de tri disposée en amont de la zone (122) de tri à alimentation indirecte, l'autre (142), en direction d'une zone (123) de tri disposée en aval de la zone (122) de tri à alimentation indirecte.

14. Installation (1) de traitement de fruits récoltés en grappes selon l'une des revendications 12 ou 13, **caractérisée en ce que** l'élément (13) séparateur surmontant la zone (122) de tri à alimentation indirecte est un élément réglable en position dans le sens d'un décalage axial le long d'une ligne parallèle à la ligne formée par la succession de zones (121, 122, 123, 124) de tri disposées en série.

15. Installation (1) de traitement de fruits récoltés en grappes selon l'une des revendications 12 à 14, **caractérisée en ce que** chaque zone (121, 122, 123, 124) de tri délimite une surface (15) de tri formée, entre un bord (16) amont et un bord (17) aval, d'une pluralité de rouleaux (18) adjacents parallèles, **en ce que** le dispositif de tri (11) comprend au niveau de chaque zone (121, 122, 123, 124) de tri un mécanisme (19) d'entraînement en rotation des rouleaux (18) dans un même sens de rotation pour permettre un déplacement des fruits récoltés en grappes à trier au-dessus de ladite surface (15) de tri suivant une direction d'avance perpendiculaire à l'axe desdits rouleaux (18) depuis le bord (16) amont en direction du bord (17) aval, lesdits rouleaux (18) au niveau de chaque zone de tri des rouleaux (18) calibreurs étant conformés ou disposés pour ménager au moins une ouverture ou une pluralité d'ouvertures calibrées entre deux rouleaux (18) voisins pour permettre un passage et une chute de fruits récoltés en grappes à trier, les fruits récoltés en grappes à trier de dimension supérieure aux ouvertures restant au-dessus de la surface (15) de tri et étant évacués au niveau du bord (17) aval de celle-ci et **en ce que** le dispositif de tri (11) comprend au moins deux récipients (23) de collecte disposés chacun sous une ou plusieurs zones de tri et associés, l'un, à une ou plusieurs zones de tri et, l'autre, ou un autre, à une ou plusieurs autres zones de tri.
